(19) Europäisches Patentamt
European Patent Office
Office européen des brevets

(11) Publication number: 0 003 012
B1

(12) EUROPEAN PATENT SPECIFICATION

(45) Date of publication of patent specification: 01.08.84

(51) Int. Cl.[3]: C 08 F 265/00, C 08 F 299/04, C 08 L 33/00

(21) Application number: 79100009.4

(22) Date of filing: 02.01.79

# (54) Cycloaliphatic acrylate compositions and continuous process for preparing them.

(30) Priority: 03.01.78 US 866679

(43) Date of publication of application: 11.07.79 Bulletin 79/14

(45) Publication of the grant of the patent: 01.08.84 Bulletin 84/31

(84) Designated Contracting States: BE DE FR GB IT NL

(56) References cited:
FR - A - 2 343 790
FR - A - 2 343 791
US - A - 3 553 294
US - A - 4 029 848

(73) Proprietor: THE DOW CHEMICAL COMPANY
Dow Center 2030 Abbott Road Post Office Box 1967
Midland Michigan 48640 (US)

(72) Inventor: Friedli, Hans Ruedi
302 Linden Lane
Lake Jackson Brazoria Texas (US)
Inventor: Nelson, Donald Louis
310 Narcissus
Lake Jackson Brazoria Texas (US)
Inventor: Massingill, John Lee, Jr.
327 Petunia
Lake Jackson Brazoria Texas (US)

(74) Representative: Weickmann, Heinrich, Dipl.-Ing. et al,
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820
D-8000 München 86 (DE)

EP 0 003 012 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Dicyclopentadiene acrylate is known from U.S. Patent 2,414,089; British Patent 1,114,585 and German Patent 1,234,027. Distilled or substantially pure dicyclopentadiene acrylate has been used alone or blended with other unsaturated monomers to make thermoplastic polymers and for crosslinking unsaturated polyester resins.

While dicyclopentadiene acrylate has been known for over 30 years, no significant commercial use has been developed because the cost of production has been prohibitive for most applications. Known processes for producing dicyclopentadiene acrylate incorporate a distillation step in order to provide a product for thermoset applications which is low in color. Dicyclopentadiene boils at 280°C at a pressure of 101,1 kPa and at 100°C at a pressure of 226 Pa. The high reactivity of the carbon-to-carbon double bond of the acrylate group and the ease with which the carbon-to-carbon double bond of the cyclopentene group cross-links makes it difficult to distil dicyclopentadiene acrylate. Even with well inhibited systems, distillation temperatures are limited to about 120°C.

No one has previously recognized that cycloaliphatic acrylate compositions prepared from dicyclopentadiene containing from 2 to 30 weight percent of the codimers of cyclopentadiene with isoprene, piperylene or methylcyclopentadiene have advantages over distilled dicyclopentadiene acrylates and can be produced having low color without the need for distillation.

From French Patents 2,343,790 and 2,343,791 there have been known film forming coatings containing dicyclopentadienyl acrylate or dicyclopentadienyl methacrylate and an unsaturated polyester or alkyd resin or a vinyl addition polymer.

Further, is has been known from US—Patent 4,029,848 to use a dicyclopentadiene concentrate as a capping agent which is added to polyester resins.

This invention is directed to cycloaliphatic acrylate compositions comprising:

(a) from 60 to 95 weight percent, preferably 71 to 91 weight percent, dicyclopentadiene acrylate, dicyclopentadiene methacrylate or mixtures thereof, characterized in that said compositions comprise further

(b) from 2 to 15 weight percent, preferably 9 to 12 weight percent, of at least one polycyclopentadienyl acrylate having the formula:

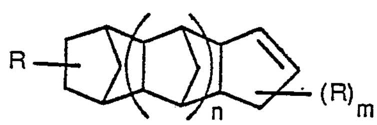

where R is $CH_2=CZC(O)—O—$,

Z is hydrogen or methyl,

n is 1 or 2,

n is 0 or 1,

(c) from 0.9 to 21 weight percent, preferably 5 to 15 weight percent of a copolymer of acrylic acid or methacrylic acid or mixtures thereof with adducts of cyclopentadiene with isoprene, piperylene, methylcyclopentadiene or mixtures thereof;

(d) from 0.05 to 10 weight percent, preferably 0.1 to 2 weight percent, of a mixture of polyacrylates having the repeating unit:

$$—CH_2—CZ—$$
$$|$$
$$C=O$$
$$|$$
$$OR'$$

where R′ is hydrogen or

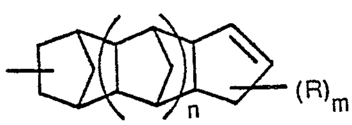

R is $CH_2=CZ—C(O)—O—$,

Z is hydrogen or methyl,

n is 0, 1 or 2, and

m is 0 or 1, and

(e) from 0 to 0.2 weight percent dicyclopentadiene and from 0 to 2 weight percent actylic acid or methacrylic acid.

There are also residual amounts of unreacted starting materials in the composition.

The compositions of this invention are useful to make crosslinked polymers alone or in combination with ethylenically unsaturated monomers and/or unsaturated resins.

This composition may be blended with a single ethylenically unsaturated monomer of a single unsaturated resin and a mixture comprising polyester resin and a vinyl resin may be present in the blends. Examples of ethylenically unsaturated monomers which are polymerizable with the present compositions include acrylates and haloacrylates; vinyl aromatic compounds such as styrene, alpha-methylstyrene, halostyrenes, vinyltoluene and divinylbenzene; allyl-containing compounds such as diallyl phthalate or allyl alcohol; olefins such as butene; diolefins such as butadiene; halogenated olefins and acrylonitrile.

Examples of unsaturated resins which are copolymerizable with the present compositions include conventional unsaturated polyester resins, terminally unsaturated resins of ester and diglycidyl ether of bisphenol A with acrylic or methacrylic acid prepared by reacting, for example, acrylic acid or methacrylic acid with diglycidyl ethers of bisphenol A, polybutadiene resins, polyisoprene resins and styrene/butadiene copolymers.

Polymerization is accomplished by using free radical forming catalysts, including initiation by electron beam and ultraviolet radiation.

Thermosettable resin blends with ethylenically unsaturated monomers usually contain from 20 to 70 weight percent, preferably 30 to 50 weight percent, of the monomer based upon the weight of the blend. Advantageously, the ethylenically unsaturated monomer contains from 5 to 90 weight percent of the cycloaliphatic acrylate compositions of this invention. To inhibit polymerization, the resin blends usually contain from 50 to 300 parts per million based on the amount of unsaturated monomer of an inhibitor such as, for example, tertiary butyl catachol, hydroquinone or the methyl ether of hydroquinone.

Thermosettable resin blends containing cycloaliphatic acrylate compositions of this invention are useful to make laminates with fibrous substrates such as, for example, asbestos fibers, carbon fibers, fibrous glass and other inorganic fibers. Free radicals forming catalysts such as, for example, benzoyl peroxide, tertiary butyl peroxide and methylethylketone peroxide are added to the resin blends. It is also of value to add accelerators such as, for example, cobalt napthenate and dimethyl aniline.

The thermosettable resin blends are rolled sprayed or impregnated into the fibrous substrate and cured in a manner well known in the art. When fibrous glass is used, it can be in any form such as, for example, chopped strands, filaments, glass ribbons, glass yarns and reinforcing mats.

The reactants used to make the compositions of this invention are acrylic acid or methacrylic acid and a dicyclopentadiene concentrate containing from 2 to 30 weight percent of the codimers of cyclopentadiene with isoprene, piperylene or methylcyclopentadiene. Light and heavy components in the concentrate such as $C_5$ olefins, $C_5$ diolefins, $C_5$ paraffins, tricyclopentadiene and tetracyclopentadiene are preferably kept below 2 weight percent, although the light components such as the $C_5$ hydrocarbons can be as high as from 7 to 10 weight percent.

The compositions of this invention can be prepared in batch or continuous reaction processes. In a batch process, inhibited dicyclopentadiene concentrate is added to inhibited acrylic acid or methacrylic acid containing boron trifluoride etherate catalyst. The reaction temperature is controlled to less than 70°C. A 0.1 to 4 times molar excess of acrylic acid or methacrylic acid is used. The reaction product is water washed from 3 to 5 times at 50°C to 90°C to give a wet product which is then dried to give the finished product.

Formation of emulsions during the wash process is prevented by keeping all exposed metal surfaces wetted with the inhibited reaction mixture by using a spray nozzle and a recirculation pump. The effectiveness of the inhibitor is maintained by maintaining from 1 to 5 percent, preferably 2 percent, oxygen in a nitrogen pad above the reaction mixture. Care must be exercised not to exceed 5 percent oxygen as above this amount there is danger of explosions.

In a continuous flow process, inhibited acrylic acid or methacrylic acid is reacted with dicyclopentadiene concentrate in a molar ratio of from 1:2 to 5:1 in the presence of from 0.5 to 2 weight percent boron trifluoride etherate catalyst based upon the total reaction mixture. The reaction temperature is controlled between from 100° to 150°C, preferably from 110° to 130°C, with a residence time of from 5 to 10 minutes. The pressure is kept such that the reactants are maintained in the liquid phase, i.e., from 304—811 Pa. The main variables, catalyst concentration, temperature and residence time are interdependent and can be chosen such that complete or essentially complete reaction of the dicyclopentadiene is obtained.

Following the addition reaction, the products are separated under vacuum in a falling film stripper column into an overhead product consisting predominantly of acrylic acid or methacrylic acid and the boron trifluoride etherate catalyst which is recycled to the reactor and a bottom product essentially free of catalyst and acrylic acid or methacrylic acid. The bottom product is water washed from 3 to 5 times at from 50° to 90°C to give a wet product which is then dried to give the finished product.

## Examples 1 and 2

Dicyclopentadiene acrylate compositions of the present invention were prepared in a continuous process using a flow reactor made of stainless steel tubing 35 inches (89 cm) in length having $\frac{3}{8}$ inch

(9.5 mm) outside diameter and 0.035 inch (0.9 mm) wall thickness. The reaction temperature was maintained at 120°C by controlling the temperature of a jacket around the reactor. The reaction pressure was controlled fro 304—506 Pa to maintain the reactants and products in the liquid phase. The effluent from the flow reactor was fed via a let-down valve to a falling film stripper column 46 inches (117 cm) in length having 0.5 inch (1.3 cm) outside diameter and 0.035 inch (0.9 mm) wall thickness. The reactor product was distributed to the inside surface of the stripper column via a slotted weir. The temperature of the stripper column was controlled at 120°C with a steam heated jacket. The stripper column was operated at a pressure of 666 Pa by employing a vacuum pump having a pressure regulator.

Glacial acrylic acid containing 0.1 percent methyl ether of hydroquinone and boron trifluoride etherate catalyst were premixed in a stainless steel feed tank. The mixture contained 2.53 weight percent boron trifluoride etherate. The acrylic acid plus catalyst mixture was pumped with a metering pump at a rate of 3.24 ml/min to a mixing Tee where they were combined with a metered stream of dicyclopentadiene concentrate inhibited with tertiary butyl catechol being pumped at a rate of 3.19 ml/min. This corresponds to a 2 to 1 molar ratio of acrylic acid to dicyclopentadiene and a catalyst concentration of 0.6 weight percent based on the total feed. This feed mixture was preheated and fed into the reactor for a residence time of 8 minutes. The product from the reactor was fed into the stripper for a residence time of 2 minutes. For Example 1, the dicyclopentadiene concentrate contained 96 weight percent dicyclopentadiene. For Example 2, the dicyclopentadiene concentrate contained 96 weight percent dicyclopentadiene. For Example 2, the dicyclopentadiene concentrate contained 84 weight percent dicyclopentadiene, 13 weight percent dimers of cyclopentadiene with isoprene and piperylene and 2 weight percent tricyclopentadiene and tetracyclopentadiene.

During a continuous run of 4.5 hours, 903.7 grams of the mixture of acrylic acid and boron trifluoride etherate were mixed with 823.8 grams of the 84 weight percent pure dicyclopentadiene. The total quantity of reactants was 1727.5 grams. After the product from the reactor was fed through the stripper column, 1248.98 grams of bottom product and 469.81 grams of overhead product were recovered. The total amount recovered was 1719 grams, 706.4 grams of the stripper bottoms were placed in a one gallon (3.8 liters) glass bottle, stirred and heated to 70°C. Then 690 grams of deionized water heated to 70°C were added and the mixture stirred for 5 minutes. Excellent phase separation occurred within about 3 minutes. The washing procedure was repeated 3 times and 689 grams of wet dicyclopentadiene acrylate concentrate was recovered. This final product was dried in a 2 liter flask by stirring with a magnetic stirrer at room temperature at a pressure of 1598 Pa. The analysis of the dried products for Examples 1 and 2 was as follows:

| | Example 1 | Example 2 |
|---|---|---|
| Gardner color | 6—7 | 9—10 |
| Viscosity, Pa·s at 24°C | 0.022 | 0.064 |
| Boron, ppm | 2 | — |
| Dicyclopentadiene acrylate, weight percent | 83.6 | 72.7 |
| Polycyclopentadienyl acryalte, weight percent | 12.6 | 10.2 |
| Copolymer of acrylic acid, weight percent | 1.0 | 14.0 |
| Polyacrylates, weight percent | 2.8 | 3.0 |

Example 3

A dicyclopentadiene acrylate concentrate of the present invention was prepared in a batch process. One hundred ninety-four pounds (88 kg) of glacial acrylic acid containing 0.1 weight percent methyl ether of hydroquinone were loaded into a stirred 100 gallon (379 liters) stainless steel reactor and mixed with 2476 grams of boron trifluoride etherate. The void space in the reactor was filled with nitrogen gas containing 2 weight percent oxygen. The pressure in the gas was maintained at from 111—132 Pa.

To 238 pounds (108 kg) of dicyclopentadiene concentrate containing 97 weight percent dicyclopentadiene was added 238 grams of the methyl ether of hydroquinone dissolved in 900 grams of acrylic acid. Eleven pounds (5 kg) of the inhibited dicyclopentadiene concentrate were added to the reactor and the mixture heated to 40°C. All exposed metal surfaces were kept wetted with inhibited reaction mixture using an internal spray system. After the reaction had started, the balance of the dicyclopentadiene concentrate was added at a rate of 25 pounds per hour (11 kg per hour) for 9.6

hours with a temperature of the reaction mixture maintained at between 50 and 60°C. After all of the dicyclopentadiene concentrate was added, the temperature of the reaction was raised to 70°C for 3.2 hours. At the completion of the reaction, unreacted acrylic acid, catalyst and color bodies were removed by 5 washes with from 50 to 65 gallons (189 to 246 liters) of water heated to 70°C. The washed product was dried for 3 hours at 69°C at a pressure of 4398 Pa. After the product was cooled to room temperature, the concentration of the methyl ether of hydroquinone was adjusted to 190 ppm. Three hundred sixty-three pounds (165 kg) of dicyclopentadiene acrylate concentrate was obtained. The yield based on dicyclopentadiene was 98.8 weight percent. The analysis of the final product was:

| | |
|---|---|
| Gardner Color | 3—4 |
| Viscosity, Pa·s at 24°C | 0.0167 |
| Boron, ppm | 5.6 |
| Dicyclopentadiene acrylate, weight percent | 87.7 |
| Polycyclopentadienyl acrylate, weight percent | 11.2 |
| Copolymers of acrylic acid, weight percent | 0.9 |
| Polyacrylates, weight percent | 0.2 |

Examples 4 and 5 and Comparative Runs A, B and C

Tests were run to demonstrate that the cycloaliphatic acrylate compositions of the present invention reduce monomer loss and increase hardness when employed in fiber glass laminate compositions containing terminally unsaturated resins of ester of diglycidyl ether of bisphenol A with acrylic or methacrylic acid. The terminally unsaturated resin of ester of diglycidyl ether of bisphenol A with acrylic or methacrylic acid employed in these tests was prepared by reacting the diglycidyl ether of bisphenol A with methacrylic acid in essentially equivalent amounts. The laminate compositions of Examples 4 and 5 contained a cycloaliphatic acrylate composition, hereinafter known as Composition A, containing 81 weight percent dicyclopentadiene acrylate, 9,3 weight percent polycyclopentadiene acrylate, 1 weight percent copolymers of acrylic acid and 8 weight percent polyacrylates. The laminate compositions of Comparative Runs B and C contain Composition B which is monomer grade distilled dicyclopentadiene acrylate. The laminate composition of Comparative Run A does not contain any cycloaliphatic acrylate compositions. The resin blend contents of the fiber glass laminate compositions expressed in weight percent are shown in Table I. The glass laminates were prepared using a normal hand lay-up technique. The finished laminates contained 75 weight percent resin and 25 weight percent fiber glass.

TABLE I

| Resin Blend, Weight Percent | Ex. 4 | Ex. 5 | Comp. Run A | Comp. Run B | Comp. Run C |
|---|---|---|---|---|---|
| Terminally unsaturated resin of * | 55 | 55 | 55 | 55 | 55 |
| Styrene | 36 | 27 | 45 | 36 | 27 |
| Composition A | 9 | 18 | 0 | 0 | 0 |
| Composition B | 0 | 0 | | 9 | 18 |

* ester of diglycidyl ether of bisphenol A with acrylic or methacrylic acid.

| Cure System, Weight Percent | | | | | |
|---|---|---|---|---|---|
| Methylethylketone peroxide | 1.5 | 1.5 | 1.0 | 1.5 | 1.5 |
| Cobalt naphthenate, 6% | 0.2 | 0.2 | 0.1 | 0.2 | 0.2 |
| Dimethylaniline | 0.15 | 0.2 | 0.1 | 0.15 | 0.2 |
| Gel Time, minutes | 17.4 | 18.6 | 17.7 | 17.4 | 18.6 |

TABLE I (contd.)

| Monomer loss, Weight Percent | Ex. 4 | Ex. 5 | Comp. Run A | Comp. Run B | Comp. Run C |
|---|---|---|---|---|---|
| 5 minutes | 0.9 | 0.6 | — | — | — |
| 10 minutes | 2.0 | 1.2 | — | — | — |
| 15 minutes | 2.8 | 1.7 | 2.6 | — | — |
| 20 minutes | 3.5 | 2.3 | — | — | — |
| 25 minutes | 3.5 | 2.6 | — | — | — |
| 30 minutes | — | 2.6 | 4.4 | — | — |
| 45 minutes | — | — | 4.8 | — | — |
| 60 minutes | — | — | 4.8 | — | — |
| **Hardness development, Barcol** | | | | | |
| 30 minutes | 42 | 15 | — | — | — |
| 45 minutes | — | — | — | 30 | 16 |
| 1 hour | 43 | 28 | 7 | 32 | 21 |
| 2 hours | 44 | 35 | 14 | — | — |
| 4 hours | 43 | 37 | 18 | — | — |
| 5 hours | — | — | — | 33 | 29 |
| 6 hours | 44 | 39 | 21 | — | — |
| 8 hours | 43 | 39 | 23 | — | — |
| 1 day | 44 | 40 | 26 | — | — |
| 2 days | 44 | 42 | 32 | — | — |
| 3 days | 46 | 42 | 32 | — | — |

The monomer weight loss tests show that Examples 4 and 5 lose 27 percent and 46 percent, respectively, less monomer than Comparative Run A. The hardness development rates show that compositions of this invention effectively accelerate the hardness development of fiber glass laminate systems containing a terminally unsaturated resin of ester of diglycidyl ether of bisphenol A with acrylic or methacrylic acid and are superior to compositions containing pure dicyclopentadiene acrylate.

Example 6 and Comparative Run D

Tests were run to demonstrate that the cycloaliphatic acrylate compositions of the present invention reduce monomer loss and increase hardness when employed in fiber glass laminate compositions containing conventional unsaturated polyester resins. The unsaturated polyester resin employed in these tests was prepared be reacting maleic anhydride, phthalic anhydride and propylene glycol in the molar proportions of 0.4 to 0.6 to 1.1, respectively. The laminate composition of Example 6 contained the cycloaliphatic acrylate composition prepared in Example 3 hereinafter known as Composition C. Comparative Run D does not contain any cycloaliphatic acrylate compositions.

The resin blend contents of the fiber glass laminate compositions expressed in weight are shown in Table II. The glass laminates were prepared from 2-ply fiber glass using a normal hand lay-up technique. The finished laminates contain 75 weight percent resin and 25 weight percent fiber glass.

TABLE II

| Resin Blend, Weight Percent | Example 6 | Comp. Run D |
|---|---|---|
| Unsaturated polyester resin | 55 | 55 |
| Styrene | 33.8 | 45 |
| Composition C | 11.2 | 0 |
| **Cure System, Weight Percent** | | |
| Cobalt naphthenate, 6% | 0.1 | 0.1 |
| n,n-Dimethylaniline | 0.1 | 0.1 |
| p-Benzoquinone | 0.026 | 0.048 |
| Methylethylketone peroxide | 1 | 1 |
| Gel time, minutes | 17.4 | 17.4 |
| **Monomer loss, Weight Percent** | | |
| 10 minutes | 2.93 | 3.06 |
| 15 minutes | 3.62 | 3.99 |
| 20 minutes | 4.74 | 5.26 |
| 25 minutes | 5.44 | 6.39 |
| 30 minutes | 6.20 | 7.52 |
| 45 minutes | 7.25 | 9.38 |
| 60 minutes | 7.25 | 9.58 |
| 75 minutes | 7.25 | 9.71 |
| 90 minutes | 7.25 | 9.71 |
| **Hardness development, Barcol** | | |
| 1 hour | 11 | 0 |
| 2 hours | 19 | 6 |
| 3 hours | 25 | 14 |
| 4 hours | 26 | 23 |
| 5 hours | 28 | 23 |
| 6 hours | 33 | 26 |
| 7 hours | 33 | 29 |
| 8 hours | 36 | 30 |
| 24 hours | 40 | 35 |

The monomer weight loss tests show that Example 6 loses 25 percent less monomer than Comparative Run D. The hardness development rates show that compositions of this invention effectively accelerate the hardness of fiber glass laminate systems containing conventional unsaturated polyester resins.

## Claims

1. A cycloaliphatic composition comprising

a) from 60 to 95 weight percent dicyclopentadiene acrylate, dicyclopentadiene methacrylate or mixtures thereof,

characterized in that said composition comprises further

b) from 2 to 15 weight percent of at least one polycyclopentadienyl acrylate having the formula:

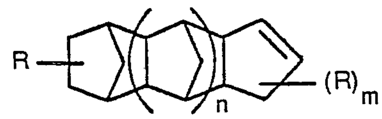

wherein R is $CH_2$=CZ—C(O)—O—,

Z is hydrogen or methyl,

n is 1 or 2, and

m is 0 or 1;

c) from 0.9 to 21 weight percent of a copolymer of acrylic acid or methacrylic acid or mixtures thereof with adducts of cyclopentadiene with isoprene, piperylene, methylcyclopentadiene or mixtures thereof,

d) from 0.05 to 10 weight percent of a mixture of polyacrylates having the repeating unit:

—$CH_2$—CZ—<br>
|<br>
C=O<br>
|<br>
OR′

wherein R′ is hydrogen or

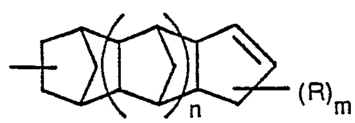

R is $CH_2$=CZ—C(O)—O—,

Z is hydrogen or methyl,

n is 0, 1 or 2, and

m is 0 or 1, and

e) from 0 to 0.2 weight percent dicyclopentadiene and from 0 to 2 weight percent acrylic acid or methacrylic acid.

2. A thermosetting composition, characterized in that it comprises an ethylenically unsaturated monomer and the cycloaliphatic acrylate composition of claim 1.

3. A thermosetting resin composition, characterised in that it comprises

a) an unsaturated polyester resin, a terminally unsaturated resin of ester of diglycidyl ether of bisphenol A with acrylic or methacrylic acid or mixtures thereof;

b) an ethylenically unsaturated monomer and

c) the cycloaliphatic acrylate composition of claim 1.

## Revendications

1. Composition d'acrylates cycloaliphatiques comprenant:

a) de 60 à 95 pour cent en poids d'acryalte de dicyclopentadiène, de méthacrylate de dicyclopentadiène ou de leurs mélanges, caractérisé par le fait que ladite composition comprend en plus:

b) de 2 à 15 pour cent en poids d'au moins un polycyclopentadiényle, acrylate ayant la formule:

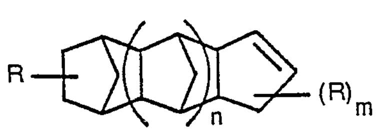

dans laquelle R est $CH_2$=CZ—C(O)—O—,

Z est de l'hydrogène ou le groupe méthyle,
n vaut 1 ou 2, et
m vaut 0 ou 1;

c) de 0,9 à 21 pour cent en poids d'un copolymère d'acide acrylique et d'acide méthacrylique ou de leurs mélanges avec des produits d'addition de cyclopentadiène avec l'isoprène, le pipérylène, le méthylcyclopentadiène ou avec des mélanges de ces hydrocarbures;

d) de 0,05 à 10 pour cent en poids d'un mélange de polyacrylates ayant le motif répétitif:

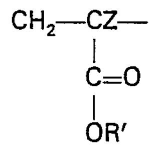

dans lequel R' est de l'hydrogène, ou

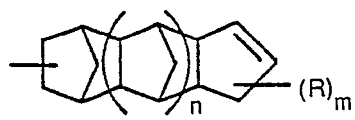

R est $CH_2{=}CZ{-}C(O){-}O{-}$,
Z est de l'hydrogène ou le groupe méthyle,
n ist 0, 1 ou 2, et
M est 0 ou 1, et

e) de 0 à 0,2 pour cent en poids de dicyclopentadiène et de 0 à 2 pour cent en poids d'acide acrylique ou d'acide méthacrylique.

2. Composition thermodurcissable, caractérisée par le fait qu'elle comprend un monomère éthyléniquement insaturé et la composition d'acrylates cycloaliphatiques de la revendication 1.

3. Composition de résine thermodurcissable, caractérisée par le fait qu'elle comprend:

a) une résine de polyester insaturée, une résine á terminaison insaturée d'ester de l'éther diglycidylique du bisphénol A avec l'acide acrylique ou l'acide méthacrylique ou leurs mélanges;

b) un monomère éthyléniquement insaturé et

c) la composition d'acrylates cycloaliphatiques de la revendication 1.

**Patentansprüche**

1. Harzzusammensetzung aus cycloaliphatischen Acrylaten enthaltend

a) 60 bis 95 Gew.-% Dicyclopentadienacrylat, Dicyclopentadienmethacrylat oder Mischungen davon, dadurch gekennzeichnet, daß die Zusammensetzung weiters enthält:

b) 2 bis 15 Gew.-% von mindestens einem Polycyclopentadienylacrylat der Formel:

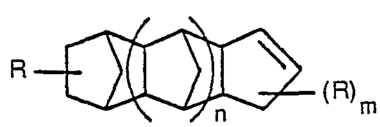

worin R $CH_2{=}CZ{-}C(O){-}O{-}$ bedeutet,
Z Wasserstoff oder Methyl ist,
$n = 1$ oder 2, und
$m = 0$ oder 1;

c) 0,9 bis 21 Gew.-% eines Copolymeren von Acrylsäure oder Methacrylsäure oder Mischungen davon mit Addukten von Cyclopentadien mit Isopren, Piperylen, Methylcyclopentadien oder Mischungen davon,

d) 0,05 bis 10 Gew.-% einer Mischung von Polyacrylaten mit der sich wiederholenden Einheit:

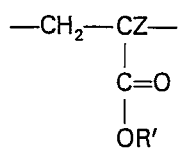

worin R' Wasserstoff oder

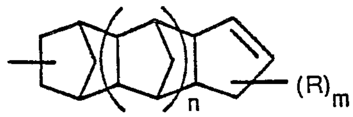

ist,

R $CH_2{=}CZ{-}C(O){-}O{-}$ bedeutet,

Z Wasserstoff oder Methyl ist,

n = 0, 1 oder 2, und

m = 0 oder 1, und

e) 0 bis 0,2 Gew.-% Dicyclopentadien und 0 bis 2 Gew.-% Acrylsäure oder Methacrylsäure.

2. Wärmehärtbare Zusammensetzung, dadurch gekennzeichnet, daß sie ein äthylenisch ungesättigtes Monomeres und die Harzzusammensetzung aus cycloaliphatischen Acrylaten nach Anspruch 1 enthält.

3. Wärmehärtbare Harzzusammensetzung, dadurch gekennzeichnet, daß sie enthält:

a) ein ungesättigtes Polyesterharz, ein endständig ungesättigtes Harz eines Esters von Diglycidyläther von Bisphenol A mit Acrylsäure oder Methacrylsäure oder Mischungen davon;

b) ein äthylenisch ungesättigtes Monomeres und

c) die Zusammensetzung aus cycloaliphatischen Acrylaten nach Anspruch 1.